# EUROPEAN PATENT APPLICATION

(11) **EP 4 307 799 A1**
(43) Date of publication of application: **17.01.2024**
(21) Application number: 21930143.9
(22) Date of filing: 10.03.2021
(51) Int. Cl.: H04W 72/04

(54) **TERMINAL, WIRELESS COMMUNICATION SYSTEM, AND WIRELESS COMMUNICATION METHOD**

(71) Applicant: NTT DOCOMO, INC., Tokyo 100-6150 (JP)
(72) Inventor: TAKAHASHI Yuki, Tokyo 100-6150 (JP); NAGATA Satoshi, Tokyo 100-6150 (JP); PI Qiping, Beijing 100190 (CN); WANG Jing, Beijing 100190 (CN); CHEN Lan, Beijing 100190 (CN)
(74) Representative: Hoffmann Eitle
(86) International application number: PCT/JP2021/009623
(87) International publication number: WO 2022/190289

(57) **Abstract**

A terminal comprises: a control unit that selects, when a first uplink control information on a first dedicated physical uplink control channel having a first priority overlaps in a time domain with a second uplink control information on a second dedicated physical uplink control channel having a second priority and a second uplink control information on a second dedicated physical uplink shared channel having a second priority based on a specific condition, and multiplexes a selected second uplink control information with the first uplink control information.

## Description

### [Technical Field]

The present disclosure relates to a terminal, a base station and a radio communication method for performing radio communication, in particular, a terminal, a radio communication system and a radio communication method related to multiplexing uplink control information with respect to an uplink control channel.

### [Background Art]

The 3rd Generation Partnership Project(3GPP) has specified the 5th generation mobile communication system (Also called 5G, New Radio(NR), or Next Generation(NG)) and is also in the process of specifying the next generation called Beyond 5G, 5G Evolution or 6G.

Release 15 of 3GPP supports multiplexing of two or more uplink channels (PUCCH(Physical Uplink Control Channel) and PUSCH(Physical Uplink Shared Channel)) transmitted in the same slot.

In addition, Release 17 of 3GPP agreed to support multiplexing Uplink Control Information (UCI) with different priorities into PUCCH or PUSCH (For example, Non-Patent Literature 1).

### [Citation List]

### [Non-Patent Literature]

[Non-Patent Literature 1]
"Enhanced Industrial Internet of Things (IoT) and ultra-reliable and low latency communication," RP-201310, 3GPP TSG RAN Meeting #86e, 3GPP, July 2020

### [Summary of Invention]

Against this background, the inventors, etc. have found, after careful examination, the necessity of defining conditions for appropriate multiplexing of UCIs on PUCCH when the UCI on PUCCH overlaps in time with the UCI on PUCCH/PUSCH of two or more and the priority of the UCI on PUCCH differs from the priority of the UCI on PUCCH/PUSCH of two or more.

Accordingly, the present invention has been made in view of such a situation, and it is an object of the present invention to provide a terminal, a radio communication system, and a radio communication method capable of appropriately multiplexing a UCI on a PUCCH when the priority of the UCI on the PUCCH is different from the priority of the UCI on the PUCCH/PUSCH of two or more.

An aspect of the present disclosure is a terminal comprising: a control unit that selects, when a first uplink control information on a first dedicated physical uplink control channel having a first priority overlaps in a time domain with a second uplink control information on a second dedicated physical uplink control channel having a second priority and a second uplink control information on a second dedicated physical uplink shared channel having a second priority based on a specific condition, and multiplexes a selected second uplink control information with the first uplink control information.

An aspect of the present disclosure is a radio communication system comprises: a terminal; and a base station; wherein the terminal comprises a control unit that selects, when a first uplink control information on a first dedicated physical uplink control channel having a first priority overlaps in a time domain with a second uplink control information on a second dedicated physical uplink control channel having a second priority and a second uplink control information on a second dedicated physical uplink shared channel having a second priority based on a specific condition, and multiplexes a selected second uplink control information with the first uplink control information.

A radio communication method comprising: selecting, when a first uplink control information on a first dedicated physical uplink control channel having a first priority overlaps in a time domain with a second uplink control information on a second dedicated physical uplink control channel having a second priority and a second uplink control information on a second dedicated physical uplink shared channel having a second priority based on a specific condition, and multiplexing a selected second uplink control information with the first uplink control information.

### [Brief Description of Drawings]

[FIG. 1] FIG. 1 is a general schematic diagram of the radio communication system 10.
[FIG. 2] FIG. 2 shows a frequency range used in the radio communication system 10.
[FIG. 3] FIG. 3 shows a configuration example of a radio frame, a sub-frame and a slot used in the radio communication system 10.
[FIG. 4] FIG. 4 shows a functional block configuration diagram of the UE200.
[FIG. 5] FIG. 5 shows a functional block configuration diagram of the gNB100.
[FIG. 6] FIG. 6 is a diagram for explaining the first application scene.
[FIG. 7] FIG. 7 is a diagram for explaining the first application scene.
[FIG. 8] FIG. 8 is a diagram for explaining the first application scene.
[FIG. 9] FIG. 9 is a diagram for explaining the second application scene.
[FIG. 10] FIG. 10 is a diagram for explaining the second application scene.
[FIG. 11] FIG. 11 is a diagram for explaining the second application scene.
[FIG. 12] FIG. 12 is a diagram for explaining a third application scene.
[FIG. 13] FIG. 13 is a diagram for explaining a third application scene.
[FIG. 14] FIG. 14 is a diagram for explaining a third application scene.
[FIG. 15] FIG. 15 is a diagram for explaining a third application scene.
[FIG. 16] FIG. 16 is a diagram for explaining a third application scene.
[FIG. 17] FIG. 17 is a diagram for explaining a third application scene.
[FIG. 18] FIG. 18 is a diagram showing an example of a hardware configuration of the gNB100 and the UE200.

### [Modes for Carrying out the Invention]

Exemplary embodiments of the present invention are explained below with reference to the accompanying drawings. The same functions and structures are denoted by the same or similar reference numerals, and their descriptions are omitted accordingly.

### [Embodiments]

### (1)Overall schematic configuration of the radio communication system

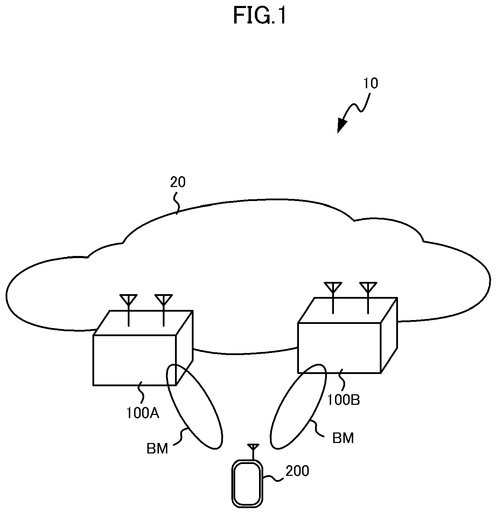

FIG. 1 is an overall schematic configuration diagram of a radio communication system 10 according to an embodiment. The radio communication system 10 is a radio communication system according to 5G New Radio(NR) and includes a Next Generation-Radio Access Network 20 (hereinafter referred to as NG-RAN20 and a terminal 200 (UE200).

The radio communication system 10 may be a radio communication system according to a system called Beyond 5G, 5G Evolution or 6G.

The NG-RAN20 includes a radio base station 100 A (gNB100 A) and a radio base station 100B (gNB100B). The specific configuration of the radio communication system 10 including the number of gNBs and UEs is not limited to the example shown in FIG. 1.

The NG-RAN20 actually includes a plurality of NG-RAN Nodes, specifically gNBs (or ng-eNBs), connected to a core network (5GC, not shown) according to 5G. Note that the NG-RAN20 and 5 GCs may be simply described as "networks ".

The gNB100 A and gNB100B are radio base stations according to 5G, and perform radio communications according to the UE200 and 5G. The gNB100 A, gNB100B, and UE200 can support Massive MIMO(Multiple-Input Multiple-Output), which generates a more directional beam BM by controlling radio signals transmitted from multiple antenna elements; Carrier Aggregation (CA), which uses multiple component carriers (CCs) bundled together; and Dual Connectivity (DC), which communicates with two or more transport blocks simultaneously between the UE and each of two NG-RAN Nodes.

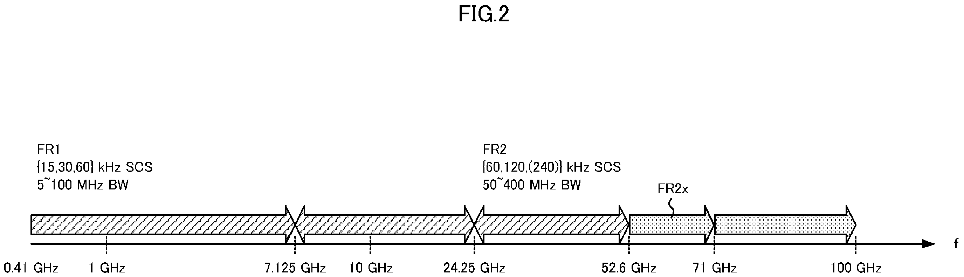

The radio communication system 10 also supports multiple frequency ranges (FRs). FIG. 2 shows the frequency ranges used in the radio communication system 10.

As shown in FIG. 2, the radio communication system 10 corresponds to FR1 and FR2. The frequency bands of each FR are as follows.

▪FR1:410 MHz~7.125 GHz -FR2:24.25 GHz~52.6 GHz FR1 uses 15, 30 or 60 kHz sub-carrier spacing (SCS) and may use a 5~100 MHz bandwidth (BW). FR2 is higher frequency than FR1 and may use 60 or 120 kHz (may include 240 kHz) SCS and may use a 50~400 MHz bandwidth (BW) .

SCS may be interpreted as numerology. Numerology is defined in 3GPP TS38.300 and corresponds to one subcarrier interval in the frequency domain.

In addition, the radio communication system 10 corresponds to a higher frequency band than the FR2 frequency band. Specifically, the radio communication system 10 corresponds to a frequency band above 52.6 GHz and up to 71 GHz or 114.25 GHz. Such a high frequency band may be referred to as "FR 2 x" for convenience.

In order to solve the problem that the influence of phase noise increases in the high frequency band, the Cyclic Prefix-Orthogonal Frequency Division Multiplexing(CP-OFDM)/Discrete Fourier Transform-Spread (DFT-S-OFDM) with larger Sub-Carrier Spacing (SCS) may be applied when a band exceeding 52.6 GHz is used.

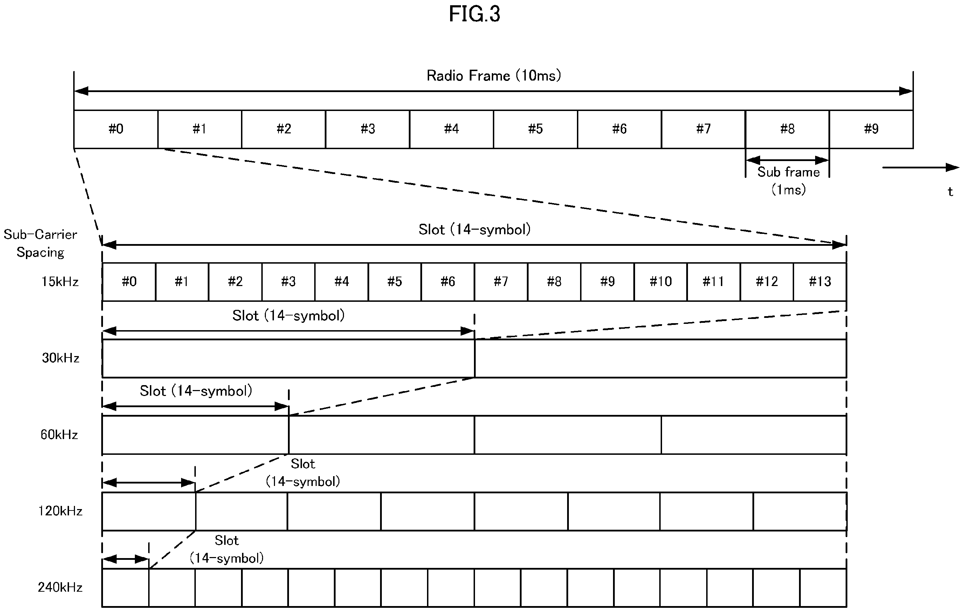

FIG. 3 shows a configuration example of a radio frame, a subframe and a slot used in the radio communication system 10.

As shown in FIG. 3, a slot consists of 14 symbols, and the larger (wider) the SCS, the shorter the symbol period (and slot period). The SCS is not limited to the interval (frequency) shown in FIG. 3. For example, 480 kHz, 960 kHz, and the like may be used.

The number of symbols constituting 1 slot may not necessarily be 14 symbols (For example, 28, 56 symbols). Furthermore, the number of slots per subframe may vary depending on the SCS.

Note that the time direction (t) shown in FIG. 3 may be referred to as a time domain, symbol period, symbol time, etc. The frequency direction may be referred to as a frequency domain, resource block, subcarrier, bandwidth part (BWP), etc.

A DMRS is a type of reference signal and is prepared for various channels. In this context, unless otherwise specified, a DMRS for a downstream data channel, specifically a PDSCH(Physical Downlink Shared Channel), may be used. However, a DMRS for an upstream data channel, specifically a PUSCH(Physical Uplink Shared Channel), may be interpreted in the same way as a DMRS for a PDSCH.

The DMRS may be used for channel estimation in a device, e.g., UE200, as part of a coherent demodulation. The DMRS may be present only in the resource block (RB) used for PDSCH transmission.

The DMRS may have more than one mapping type. Specifically, the DMRS may have a mapping type A and a mapping type B. In a mapping type A, the first DMRS is located in the second or third symbol of the slot. In a mapping type A, the DMRS may be mapped relative to the slot boundary regardless of where the actual data transmission is initiated in the slot. The reason why the first DMRS is placed in the second or third symbol of the slot may be interpreted as placing the first DMRS after the control resource sets (CORESET).

In mapping type B, the first DMRS may be placed in the first symbol of the data allocation. That is, the location of the DMRS may be given relative to where the data is located, rather than relative to the slot boundary.

The DMRS may also have more than one type. Specifically, the DMRS may have Type 1 and Type 2. Type 1 and Type 2 differ in the maximum number of mapping and orthogonal reference signals in the frequency domain. Type 1 can output up to four orthogonal signals in single-symbol DMRS, and Type 2 can output up to eight orthogonal signals in double-symbol DMRS.

### (2) Functional block configuration of radio communication system

Next, a functional block configuration of the radio communication system 10 will be described.

First, a functional block configuration of the UE200 will be described.

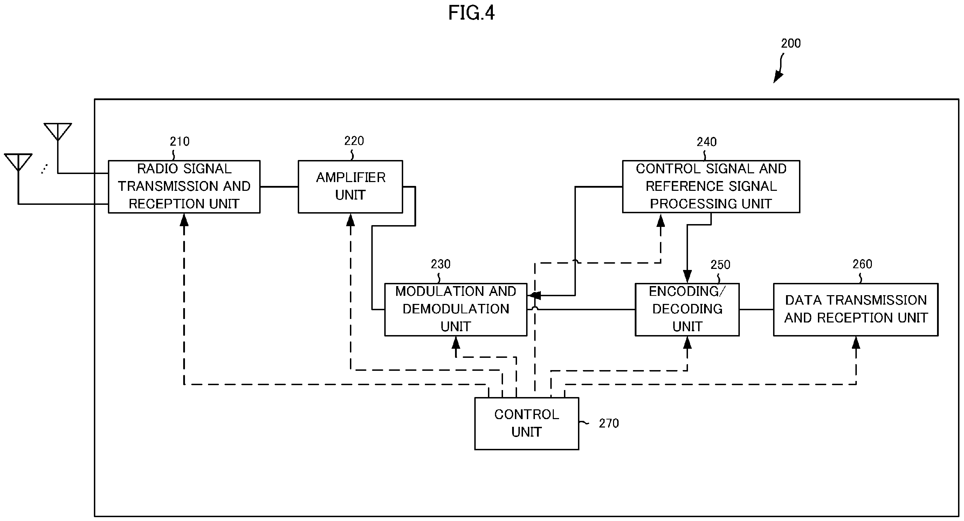

FIG. 4 is a functional block configuration diagram of the UE200. As shown in FIG. 4, the UE200 includes a radio signal transmission and reception unit 210, an amplifier unit 220, a modulation and demodulation unit 230, a control signal and reference signal processing unit 240, an encoding/decoding unit 250, a data transmission and reception unit 260, and a control unit 270.

The radio signal transmission and reception unit 210 transmits and receives radio signals in accordance with the NR. The radio signal transmission and reception unit 210 corresponds to a Massive MIMO, a CA using a plurality of CCs bundled together, and a DC that simultaneously communicates between a UE and each of two NG-RAN Nodes.

The amplifier unit 220 is composed of a PA (Power Amplifier)/LNA (Low Noise Amplifier) or the like. The amplifier unit 220 amplifies the signal output from the modulation and demodulation unit 230 to a predetermined power level. The amplifier unit 220 also amplifies the RF signal output from the radio signal transmission and reception unit 210.

The modulation and demodulation unit 230 performs data modulation/demodulation, transmission power setting, resource block allocation, etc. for each predetermined communication destination (gNB100 or other gNB). In the modulation and demodulation unit 230, Cyclic Prefix-Orthogonal Frequency Division Multiplexing(CP-OFDM)/Discrete Fourier Transform-Spread (DFT-S-OFDM) may be applied. DFT-S-OFDM may be used not only for the uplink (UL) but also for the downlink (DL).

The control signal and reference signal processing unit 240 performs processing related to various control signals transmitted and received by the UE200 and various reference signals transmitted and received by the UE200.

Specifically, the control signal and reference signal processing unit 240 receives various control signals transmitted from the gNB100 via a predetermined control channel, for example, a radio resource control layer (RRC) control signal. The control signal and reference signal processing unit 240 also transmits various control signals to the gNB100 via a predetermined control channel.

The control signal and reference signal processing unit 240 executes processing using a reference signal (RS) such as a demodulation reference signal (DMRS) and a phase tracking reference signal (PTRS).

The DMRS is a known reference signal (pilot signal) between a base station and a terminal of each terminal for estimating a fading channel used for data demodulation. The PTRS is a reference signal of each terminal for estimating phase noise, which is a problem in a high frequency band.

In addition to the DMRS and the PTRS, the reference signal may include a Channel State Information-Reference Signal(CSI-RS), a Sounding Reference Signal (SRS), and a Positioning Reference Signal (PRS) for position information.

The channel may include a control channel and a data channel. The control channel may include PDCCH(Physical Downlink Control Channel), PUCCH(Physical Uplink Control Channel), RACH(Random Access Channel), Downlink Control Information (DCI) including Random Access Radio Network Temporary Identifier(RA-RNTI), and Physical Broadcast Channel (PBCH).

The data channel may also include PDSCH(Physical Downlink Shared Channel) and PUSCH(Physical Uplink Shared Channel). Data means data transmitted over a data channel. A data channel may be read as a shared channel.

Here, the control signal and reference signal processing unit 240 may receive downlink control information (DCI). The DCI includes existing fields for storing DCI Formats, Carrier indicator(CI), BWP indicator, Frequency Domain Resource Allocation (FDRA), Time Domain Resource Allocation (TDRA), Modulation and Coding Scheme (MCS), HPN(HARQ Process Number), New Data Indicator (NDI), Redundancy Version (RV), and the like.

The value stored in the DCI Format field is an information element that specifies the format of the DCI. The value stored in the CI field is an information element that specifies the CC to which the DCI applies. The value stored in the BWP indicator field is an information element that specifies the BWP to which the DCI applies. The BWP that can be specified by the BWP indicator is set by an information element (BandwidthPart-Config) contained in the RRC message. The value stored in the FDRA field is an information element that specifies the frequency domain resource to which the DCI applies. The frequency domain resource is specified by the value stored in the FDRA field and the information element (RA Type) contained in the RRC message. The value stored in the TDRA field is an information element that specifies the time domain resource to which the DCI applies. The time domain resource is specified by the value stored in the TDRA field and the information element (pdsch-TimeDomainAllocationList, pusch-TimeDomainAllocationList) contained in the RRC message. The time domain resource may be specified by the value stored in the TDRA field and the default table. The value stored in the MCS field is an information element that specifies the MCS to which the DCI applies. The MCS is specified by the value stored in the MCS and the MCS table. The MCS table may be specified by an RRC message or specified by RNTI scrambling. The value stored in the HPN field is an information element that specifies the HARQ Process to which the DCI is applied. The value stored in the NDI is an information element that identifies whether the data to which the DCI is applied is first-time data. The value stored in the RV field is an information element that specifies the redundancy of the data to which the DCI is applied.

The encoding/decoding unit 250 performs data partitioning/concatenation and channel coding/decoding for each predetermined communication destination (gNB100 or other gNB).

Specifically, the encoding/decoding unit 250 divides the data output from the data transmission and reception unit 260 into predetermined sizes and performs channel coding for the divided data. The encoding/decoding unit 250 decodes the data output from the modulation and demodulation unit 230 and concatenates the decoded data.

The data transmission and reception unit 260 transmits and receives the protocol data unit (PDU) and the service data unit (SDU). Specifically, the data transmission and reception unit 260 performs assembly/disassembly of the PDU/SDU in a plurality of layers (Media access control layer (MAC), radio link control layer (RLC), packet data convergence protocol layer (PDCP), etc.). The data transmission and reception unit 260 also performs error correction and retransmission control of data based on HARQ(Hybrid Automatic Repeat Request).

The control unit 270 controls each function block constituting the UE200. In the embodiment, the control unit 270 constitutes a control unit that selects, when a first uplink control information (hereinafter, the first UCI) on a first dedicated physical uplink control channel (hereinafter, the first PUCCH) having a first priority overlaps in a time domain with a second uplink control information (hereinafter, the second UCI) on a second dedicated physical uplink control channel (hereinafter, the second PUCCH) having a second priority and a second uplink control information (hereinafter, the second UCI) on a second dedicated physical uplink shared channel (hereinafter, the second PUSCH) having a second priority based on a specific condition, and multiplexes a selected second UCI with the first UCI.

Here, the first priority is different from the second priority. Two types of UCI priorities, HP(High Priority) and LP(Low Priority), are exemplified. The first priority may be HP, the second priority may be LP, the first priority may be LP, and the second priority may be HP. Three or more types of priorities may be specified as UCI priorities.

Note that the control unit 270 controls the control signal and reference signal processing unit 240 described above, and the control signal and reference signal processing unit 240 transmits the first UCI multiplexed with the second UCI selected based on the specific conditions via the second PUSCH.

Second, the functional block configuration of the gNB100 will be described.

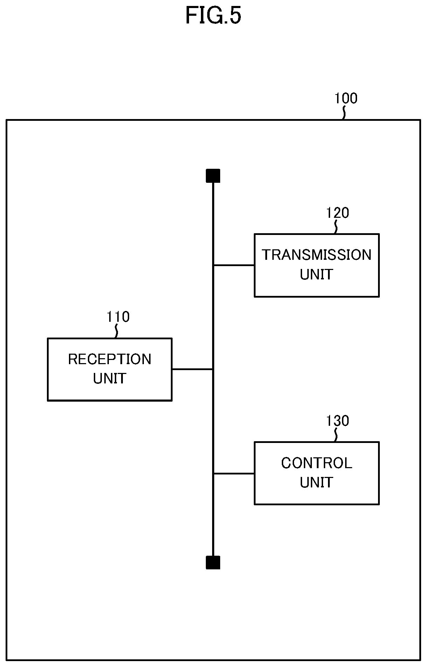

FIG. 5 is a functional block diagram of the gNB100. As shown in FIG. 5, the gNB100 has a reception unit 110, a transmission unit 120 and a control unit 130.

The reception unit 110 receives various signals from the UE200. The reception unit 110 may receive UL signals via PUCCH or PUSCH.

The transmission unit 120 transmits various signals to the UE200. The transmission unit 120 may transmit DL signals via PDCCH or PDSCH.

The control unit 130 controls the gNB100. The control unit assumes that the reception unit 110 receives, via the second PUSCH, the first UCI multiplexed with the second UCI selected based on the specific condition.

### (3)Specific condition

The specific condition of the embodiment will be described below. In the following, the first PUCCH may be used synonymously with the first UCI, and the second PUCCH and the second PUSCH may be used synonymously with the second UCI. The second PUCCH and the second PUSCH may simply be referred to as the second UL channel. Accordingly, the specific condition may be considered to be a condition for selecting the second UL channel for multiplexing the first PUCCH from among the second ULPUCCH and the second PUSCH.

The specific condition may include a first condition for preferentially selecting the second UCI on the second PUCCH. The first condition is that the first PUCCH is multiplexed to the second PUCCH before the second PUCCH when there is a second PUCCH which overlaps the first PUCCH in time.

The first condition may include a condition 1A for multiplexing the first PUCCH to the second PUCCH having the same priority as the first PUCCH, and a condition 1B for multiplexing the first PUCCH to the second PUCCH having a priority different from the first PUCCH. Further, the first condition may include a condition 1C for multiplexing the LP PUCCH to the HP PUCCH.

Here, the first condition may be applied in the order of condition 1A-> condition 1B→ condition 1C.

The specific condition may include a second condition that preferentially selects the second UCI on the second PUSCH. The second condition is to multiplex the first PUCCH into the second PUSCH before the second PUCCH if there is a second PUSCH that overlaps the first PUCCH in time.

The second condition may include conditions that apply when the priority of the first PUCCH is assumed to be the same as the second PUCCH. The second condition may include the following conditions:

The second condition may include condition 2A for selecting the PUSCH of A(Aperiodic)-CSI that overlaps with the resource of the first PUCCH.

The second condition may include condition 2B for selecting the PUSCH with the earliest slot(s) relative to the first slot(s) of the PUCCH.

The second condition may include condition 2C for preferentially selecting the PUSCH scheduled by the Dynamic Grant (DG PUSCH) over the PUSCH scheduled by the Configured Grant (CG PUSCH).

The second condition may include condition 2D for preferentially selecting the PUSCH of the CC serving cell having a smaller CC serving cell index than the PUSCH of the CC serving cell having a larger CC serving cell index.

The second condition may include condition 2E which preferentially selects the PUSCH of the earlier transmission over the PUSCH of the later transmission.

The second condition may be applied in the order of condition 2A_{→} condition 2B_{→} condition 2C_{→} condition 2D_{→} condition 2E.

### (4)First application scene

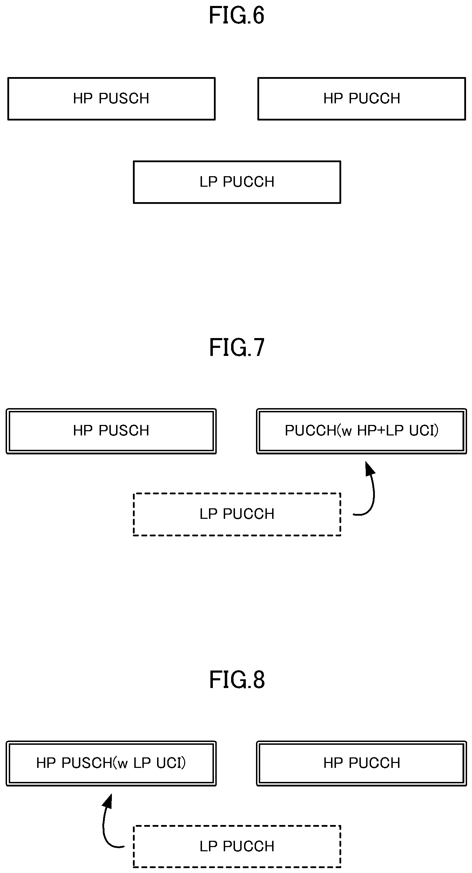

The first application scene of the embodiment will be described below. In the first application scene, as shown in FIG. 6, LP PUCCH is present as the first PUCCH, HP PUCCH is present as the second PUCCH, and HP PUSCH is present as the second PUSCH.

### (4.1) Option 1-1

In Option 1-1, the specific condition includes a first condition and a second condition, and the first condition is applied before the second condition. That is, multiplexing between PUCCHs is performed preferentially.

For example, as shown in FIG. 7, UE200 performs multiplexing between LP PUCCH and HP PUCCH preferentially based on the first condition. Specifically, UE200 multiplexes LP PUCCH to HP PUCCH based on condition 1C. As a result, UE200 transmits HP PUSCH and PUCCH(w HP+LP UCI) separately because HP PUSCH and PUCCH(w HP+LP UCI) do not overlap in time.

### (4.2) Option 1-2

In Option 1-2, the specific condition includes the first condition and the second condition, and the second condition is applied before the first condition. That is, the multiplexing between PUCCH and PUSCH is performed preferentially.

For example, as shown in FIG. 8, the UE200 preferentially performs multiplexing between the LP PUCCH and the HP PUSCH based on the second condition. Specifically, the UE200 multiplexes the LP PUCCH to the HP PUSCH. As a result, since the HP PUSCH(w LP UCI) and the HP PUCCH do not overlap in time, the UE200 transmits the HP PUSCH(w LP UCI) and the HP PUCCH separately.

### (5)Second application scene

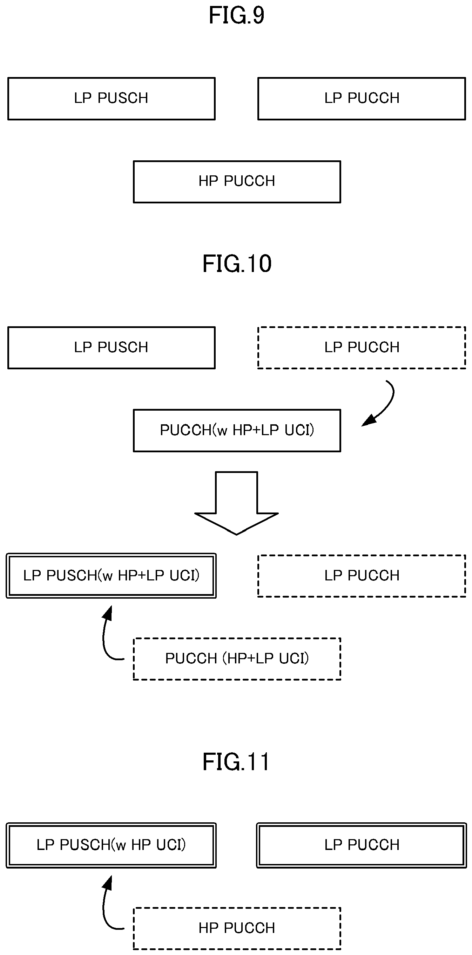

The second application scene of the embodiment will be described below. In the second application scene, as shown in FIG. 9, HP PUCCH exists as the first PUCCH, LP PUCCH exists as the second PUCCH, and LP PUSCH exists as the second PUSCH.

### (5.1) Option 2-1

In option 2-1, the specific condition includes the first and second conditions, and the first condition is applied before the second condition. That is, multiplexing between PUCCHs is performed preferentially.

For example, as shown in FIG. 10, UE200 performs multiplexing between LP PUCCH and HP PUCCH preferentially based on the first condition. Specifically, UE200 multiplexes LP PUCCH to HP PUCCH based on condition 1 C. Furthermore, because PUCCH(w HP+LP UCI) and LP PUSCH overlap in time, UE200 multiplexes PUCCH(w HP+LP UCI) to LP PUSCH based on condition 2. Eventually, UE200 transmits LP PUSCH(w HP+LP UCI) independently.

### (5.2) Option 2-2

In Option 2-2, the specific condition includes the first condition and the second condition, and the second condition is applied before the first condition. That is, multiplexing between PUCCH and PUSCH is performed preferentially.

For example, as shown in FIG. 11, UE200 performs multiplexing between HP PUCCH and LP PUSCH preferentially based on the second condition. Specifically, UE200 multiplexes HP PUCCH to LP PUSCH. As a result, because LP PUSCH(w HP UCI) and LP PUCCH do not overlap in time, UE200 transmits LP PUSCH(w HP UCI) and LP PUCCH separately.

### (6)Third application scene

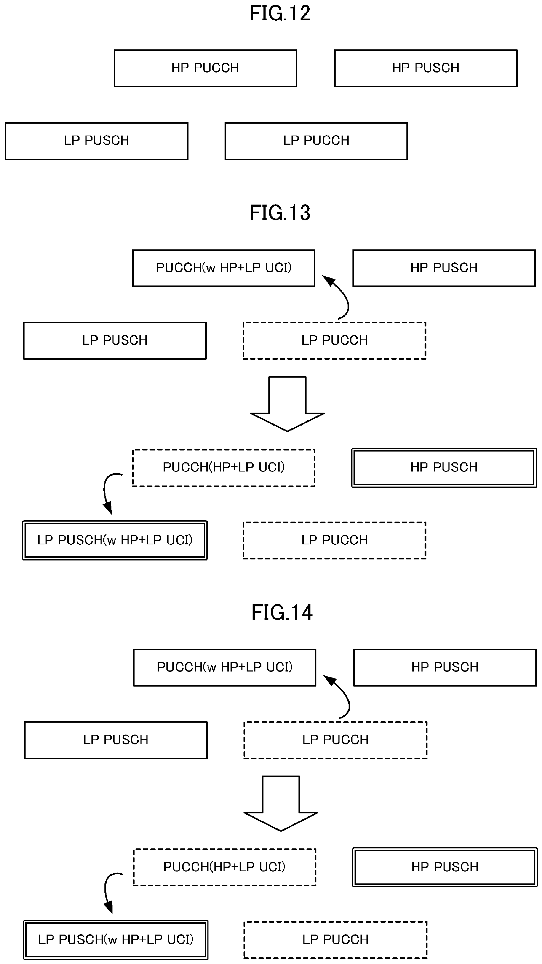

The third application scene of the embodiment will be described below. In the third application scene, as shown in FIG. 12, when focusing on HP PUCCH, there are LP PUCCH and LP PUSCH which overlap in time with HP PUCCH, and when focusing on LP PUCCH, there are HP PUCCH and HP PUSCH which overlap in time with LP PUCCH. That is, the case where both HP PUCCH and LP PUCCH can be the first PUCCH is illustrated.

### (6.1) Option 3-1

In Option 3-1, the specific condition includes the first condition and the second condition, and the first condition is applied before the second condition. That is, multiplexing between PUCCHs is performed preferentially. In addition, in Option 3-1, the specific condition may include a third condition indicating which of HP PUCCH and LP PUCCH is performed first. The third condition may include a condition for performing HP PUCCH multiplexing before LP PUCCH multiplexing, or a condition for performing LP PUCCH multiplexing before HP PUCCH multiplexing.

First, a third condition for performing HP PUCCH multiplexing before LP PUCCH multiplexing will be described. As shown in FIG. 13, the UE200 focuses on HP PUCCH based on the third condition, and preferentially performs LP PUCCH multiplexing with HP PUCCH based on the first condition. Specifically, the UE200 multiplexes LP PUCCH with HP PUCCH based on the condition 1 C. Furthermore, since PUCCH(w HP+LP UCI) and LP PUSCH overlap in time, UE200 multiplexes PUCCH(w HP+LP UCI) to LP PUSCH based on the second condition. As a result, since LP PUSCH(w HP+LP UCI) and HP PUSCH do not overlap in time, UE200 transmits LP PUSCH(w HP+LP UCI) and HP PUSCH separately.

Second, a third condition for performing LP PUCCH multiplexing before HP PUCCH multiplexing will be described. As shown in FIG. 14, UE200 focuses on LP PUCCH based on the third condition, and preferentially performs LP PUCCH multiplexing with HP PUCCH based on the first condition. Specifically, UE200 multiplexes LP PUCCH with HP PUCCH based on condition 1 C. Furthermore, because PUCCH(w HP+LP UCI) and LP PUSCH overlap in time, UE200 multiplexes PUCCH(w HP+LP UCI) with LP PUSCH based on condition 2. As a result, because LP PUSCH(w HP+LP UCI) and HP PUSCH do not overlap in time, UE200 transmits LP PUSCH(w HP+LP UCI) and HP PUSCH separately.

### (6.2) Option 3-2

In option 3-2, the specific condition includes the first condition and the second condition, and the second condition is applied before the first condition. That is, the multiplexing between PUCCH and PUSCH is performed preferentially. In addition, in Option 3-2, the specific condition may include a third condition indicating which of HP PUCCH and LP PUCCH is performed first. The third condition may include a condition for performing HP PUCCH multiplexing before LP PUCCH multiplexing, or a condition for performing LP PUCCH multiplexing before HP PUCCH multiplexing.

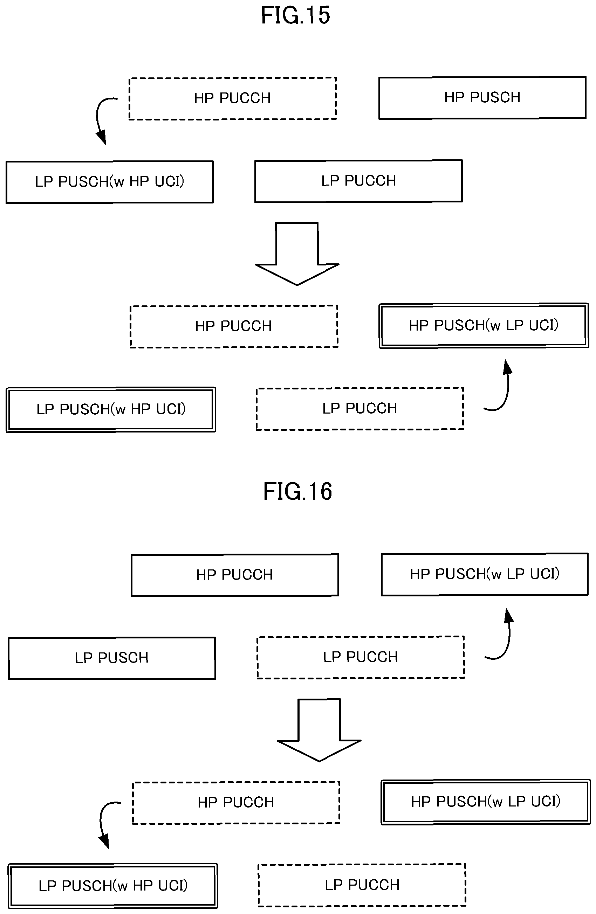

First, a third condition for performing HP PUCCH multiplexing before LP PUCCH multiplexing will be described. As shown in FIG. 15, the UE200 focuses on HP PUCCH based on the third condition, and preferentially performs HP PUCCH multiplexing with LP PUSCH based on the second condition. Specifically, the UE200 multiplexes HP PUCCH with LP PUSCH. Furthermore, because HP PUSCH that overlaps LP PUCCH in time remains, the UE200 multiplexes LP PUCCH with HP PUSCH based on the second condition. As a result, because LP PUSCH(w HP UCI) and HP PUSCH(w LP UCI) do not overlap in time, the UE200 transmits LP PUSCH(w HP UCI) and HP PUSCH(w LP UCI) separately.

Second, a third condition in which the LP PUCCH is multiplexed before the HP PUCCH is multiplexed will be described. As shown in FIG. 16, the UE200 focuses on the LP PUCCH based on the third condition, and preferentially executes the LP PUCCH and HP PUSCH multiplexes based on the second condition. Specifically, the UE200 multiplexes the LP PUCCH onto the HP PUSCH. Furthermore, because the LP PUSCH that temporally overlaps with the HP PUCCH remains, the UE200 multiplexes the HP PUCCH onto the LP PUSCH based on the second condition. As a result, because the LP PUSCH(w HP UCI) and the HP PUSCH(w LP UCI) do not temporally overlap, the UE200 transmits the LP PUSCH(w HP UCI) and the HP PUSCH(w LP UCI) separately.

### (6.3) Option 3-3

In Option 3-3, the specific condition includes the first condition and the second condition, and the first condition is applied before the second condition. That is, multiplexing between PUCCHs is performed preferentially. Option 3-3 does not specifically specify the third condition described above.

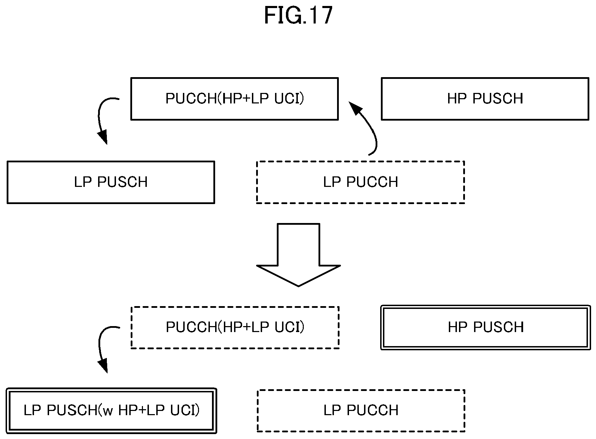

For example, as shown in FIG. 17, the UE200 preferentially performs multiplexing of the LP PUCCH and the HP PUCCH based on the first condition. Specifically, the UE200 multiplexes the LP PUCCH to the HP PUCCH based on the condition 1 C. Furthermore, because the PUCCH(w HP+LP UCI) and the LP PUSCH overlap in time, the UE200 multiplexes the PUCCH(w HP+LP UCI) to the LP PUSCH based on the second condition. As a result, because the LP PUSCH(w HP+LP UCI) and the HP PUSCH do not overlap in time, the UE200 transmits the LP PUSCH(w HP+LP UCI) and the HP PUSCH separately.

### (7)Operations and effects

In an embodiment, when the first UCI on the first PUCCH temporally overlaps the UCI on the second PUCCH and the UCI on the second PUSCH, the UE200 selects a second UCI to be multiplexed with the first UCI based on a specific condition and multiplexes the selected second UCI with the first UCI. With such a configuration, even when the second PUCCH and the second PUSCH temporally overlap with the first PUCCH are assumed, the first PUCCH can be appropriately multiplexed on the second UL channel.

### (8)Other embodiments

Although the contents of the present invention have been described in accordance with the above embodiments, it is obvious to those skilled in the art that the present invention is not limited to these descriptions but can be modified and improved in various ways .

In the above disclosure, a case in which the first PUCCH is an HP PUCCH and the second PUCCH is an LP PUCCH has been illustrated. However, the above disclosure is not limited thereto. The first PUCCH may be an LP PUCCH and the second PUSCH may be an HP PUSCH.

Although not specifically mentioned in the above disclosure, the same or different specification criteria may be applied to the relationship between HP PUCCH and LP PUCCH, the relationship between HP PUCCH and LP PUSCH, the relationship between LP PUCCH and HP PUCCH, and the relationship between LP PUCCH and HP PUSCH.

Although not specifically mentioned in the above disclosure, the application of any of the above options may be set by an upper layer parameter, reported by UE Capability in UE 200, or predetermined in the radio communication system 10. In addition, the application of any of the above options may be determined by an upper layer parameter and UE Capability.

Here, UE Capability may include the following information elements:
First, UE Capability may include an information element that defines whether the function of multiplexing the first PUSCCH into the UL channel (second PUCCH or second PUSCH) is supported when the first PUCCH temporally overlaps the second PUCCH and the second PUSCH.

Second, UE Capability may include an information element that defines whether the function of multiplexing the HP PUSCCH into the UL channel (LP PUCCH or LP PUSCH) is supported when the HP PUCCH temporally overlaps the LP PUCCH and the LP PUSCH.

Third, UE Capability may include an information element that defines whether the function of multiplexing the LP PUSCCH into the UL channel (HP PUCCH or HP PUSCH) is supported when the LP PUCCH temporally overlaps the HP PUCCH and the HP PUSCH.

FIG. 4 and FIG. 5 show blocks of functional units. Those functional blocks (structural components) can be realized by a desired combination of at least one of hardware and software. Means for realizing each functional block is not particularly limited. That is, each functional block may be implemented using a single device that is physically or logically coupled, or two or more devices that are physically or logically separated may be directly or indirectly (For example, using wire, wireless, etc.) connected and implemented using these multiple devices. The functional block may be implemented using the single device or the multiple devices combined with software.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, the functional block (component) that functions transmission is called a transmission unit (transmitting unit) or a transmitter. As described above, the method of realization of both is not particularly limited.

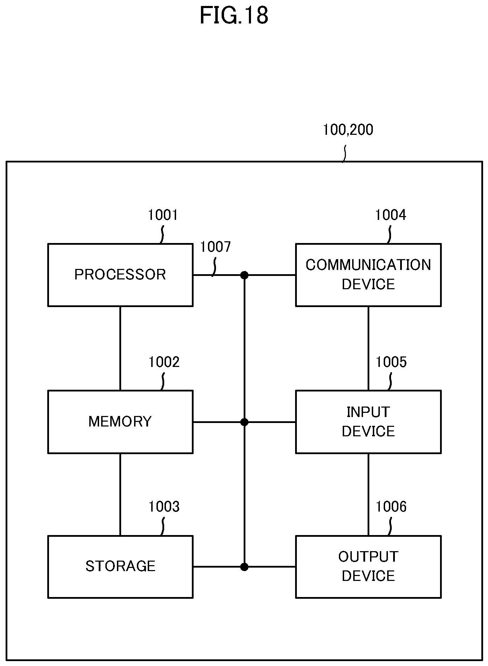

In addition, the above-mentioned gNB100 and UE200 (the device) may function as a computer for processing the radio communication method of the present disclosure. FIG. 18 is a diagram showing an example of a hardware configuration of the device. As shown in FIG. 18, the device may be configured as a computer device including a processor 1001, a memory 1002, a storage 1003, a communication device 1004, an input device 1005, an output device 1006 and a bus 1007.

Furthermore, in the following explanation, the term "device" can be replaced with a circuit, device, unit, and the like. The hardware configuration of the device may be configured to include one or more of the devices shown or may be configured without some of the devices.

Each functional block of the device (see FIG. 4) is implemented by any hardware element of the computer device or a combination of the hardware elements.

Moreover, the processor 1001 performs computing by loading a predetermined software (computer program) on hardware such as the processor 1001 and the memory 1002, and realizes various functions of the reference device by controlling communication via the communication device 1004, and controlling reading and/or writing of data on the memory 1002 and the storage 1003.

Processor 1001, for example, operates an operating system to control the entire computer. Processor 1001 may be configured with a central processing unit (CPU), including interfaces to peripheral devices, controls, computing devices, registers, etc.

Moreover, the processor 1001 reads a computer program (program code), a software module, data, and the like from the storage 1003 and/or the communication device 1004 into the memory 1002, and executes various processes according to the data. As the computer program, a computer program that is capable of executing on the computer at least a part of the operation explained in the above embodiments is used. In addition, the various processes described above may be performed by one processor 1001 or may be performed simultaneously or sequentially by two or more processors 1001. The processor 1001 can be implemented by using one or more chips. Alternatively, the computer program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. The memory 1002 may be referred to as a register, cache, main memory (main storage device), or the like. The memory 1002 may store a program (program code), a software module, or the like capable of executing a method according to an embodiment of the present disclosure.

The storage 1003 is a computer readable recording medium. Examples of the storage 1003 include an optical disk such as Compact Disc ROM (CD-ROM), a hard disk drive, a flexible disk, a magnetooptical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and/or the storage 1003, a server, or other appropriate medium.

The communication device 1004 is hardware (transmission/reception device) capable of performing communication between computers via a wired and/or wireless network. The communication device 1004 is also called, for example, a network device, a network controller, a network card, a communication module, and the like.

The communication device 1004 includes a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

Each device, such as the processor 1001 and the memory 1002, is connected by a bus 1007 for communicating information. The bus 1007 may be configured using a single bus or a different bus for each device.

In addition, the device may comprise hardware such as a microprocessor, a digital signal processor (DSP), an application specific integrated circuit (ASIC), a programmable logic device (PLD), a field programmable gate array (FPGA), or the like, which may provide some or all of each functional block. For example, the processor 1001 may be implemented by using at least one of these hardware.

Information notification is not limited to the aspects/embodiments described in the present disclosure and may be performed using other methods. For example, information notification may be performed by physical layer signaling (e.g., Downlink Control Information (DCI), Uplink Control Information (UCI), higher layer signaling (e.g., RRC signaling, Medium Access Control (MAC) signaling, Notification Information (Master Information Block (MIB), System Information Block (SIB)), other signals, or combinations thereof. RRC signaling may also be referred to as RRC messages, e.g., RRC Connection Setup messages, RRC Connection Reconfiguration messages, etc.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

The processing procedures, sequences, flowcharts, etc. of the embodiments/embodiments described in the present disclosure may be rearranged as long as there is no conflict. For example, the method described in the present disclosure presents the elements of the various steps using an exemplary sequence and is not limited to the particular sequence presented.

The specific operation that is performed by the base station in the present disclosure may be performed by its upper node in some cases. It is apparent that in a network consisting of one or more network nodes having a base station, the various operations performed for communication with the terminal may be performed by at least one of the base station and other network nodes (Examples include, but are not limited to, MME or S-GW.) other than the base station. In the above, an example in which there is one network node other than the base station is explained; however, a combination of a plurality of other network nodes (for example, MME and S-GW) may be used.

Information, signals (information, etc.) may be output from a higher layer (or lower layer) to a lower layer (or higher layer). It may be input and output via a plurality of network nodes.

The input/output information can be stored in a specific location (for example, a memory) or can be managed in a management table. The input/output information may be overwritten, updated, or added. The information can be deleted after outputting. The inputted information can be transmitted to another device.

The determination may be based on a value represented by a single bit (0 or 1), a true or false value (Boolean: true or false), or a numerical comparison (For example, comparison with a given value).

Each of the aspects/embodiments described in the present disclosure may be used alone, in combination, or alternatively in execution. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, if software is transmitted from a website, server, or other remote source using at least one of wired technology (Coaxial, fiber-optic, twisted-pair, or digital subscriber line (DSL)) and wireless technology (Infrared, microwave, etc.), at least one of these wired and wireless technologies is included within the definition of a transmission medium.

Information, signals, or the like mentioned above may be represented by using any of a variety of different technologies. For example, data, instructions, commands, information, signals, bits, symbols, chips, etc. that may be referred to throughout the above description may be represented by voltage, current, electromagnetic waves, magnetic fields or magnetic particles, optical fields or photons, or any combination thereof.

The terms described in the present disclosure and those necessary for understanding the present disclosure may be replaced with terms having the same or similar meanings. For example, at least one of a channel and a symbol may be a signal (signaling). The signal may also be a message. Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)," "radio base station," "fixed station," "NodeB," "eNodeB (eNB)," "gNodeB (gNB)," "access point," "transmission point," "reception point," "transmission/reception point," "cell," "sector," "cell group," "carrier," "component carrier," and the like can be used interchangeably. The base station may also be referred to with the terms such as a macro cell, a small cell, a femtocell, or a pico cell.

The base station may contain one or more (For example, three) cells, also called sectors. In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a base station performing communication services in this coverage and to a portion or the entire coverage area of at least one of the base station subsystems.

In the present disclosure, the terms "mobile station (Mobile Station: MS)," "user terminal," "user equipment (User Equipment: UE)," "terminal" and the like can be used interchangeably.

A mobile station may also be referred to by one of ordinary skill in the art as a subscriber station, mobile unit, subscriber unit, wireless unit, remote unit, mobile device, wireless device, radio communication device, remote device, mobile subscriber station, access terminal, mobile terminal, wireless terminal, remote terminal, handset, user agent, mobile client, client, or some other appropriate term.

At least one of a base station and a mobile station may be called a transmitting device, a receiving device, a communication device, or the like. Note that, at least one of a base station and a mobile station may be a device mounted on a moving body, a moving body itself, or the like. The mobile may be a vehicle (For example, cars, planes, etc.), an unmanned mobile (For example, drones, self-driving cars,), or a robot (manned or unmanned). At least one of a base station and a mobile station can be a device that does not necessarily move during the communication operation. For example, at least one of a base station and a mobile station may be an Internet of Things (IoT) device such as a sensor.

The base station in the present disclosure may be read as a mobile station (user terminal, hereinafter the same). For example, each aspect/embodiment of the present disclosure may be applied to a configuration in which communication between a base station and a mobile station is replaced by communication between a plurality of mobile stations (For example, it may be called device-to-device (D2D), vehicle-to-everything (V2X), etc.). In this case, the mobile station may have the function of the base station. Further, words such as "up" and "down" may be replaced with words corresponding to communication between terminals (For example, "side"). For example, terms an uplink channel, a downlink channel, or the like may be read as a side channel.

Similarly, the mobile station in the present disclosure may be replaced with a base station. In this case, the base station may have the function of the mobile station.

The radio frame may be composed of one or more frames in the time domain. Each frame or frames in the time domain may be called a subframe.

The subframes may also be composed of one or more slots in the time domain. The subframes may be of a fixed time length (For example, 1 ms) independent of numerology.

The numerology may be a communication parameter applied to at least one of the transmission and reception of a signal or channel. The numerology can include one among, for example, subcarrier spacing (SubCarrier Spacing: SCS), bandwidth, symbol length, cyclic prefix length, transmission time interval (Transmission Time Interval: TTI), number of symbols per TTI, radio frame configuration, a specific filtering process performed by a transceiver in the frequency domain, a specific windowing process performed by a transceiver in the time domain, and the like.

The slot may consist of one or more symbols (Orthogonal Frequency Division Multiplexing (OFDM)) symbols, Single Carrier Frequency Division Multiple Access(SC-FDMA) symbols, etc., in the time domain. A slot may be a unit of time based on the numerology.

A slot may include a plurality of minislots. Each minislot may be composed of one or more symbols in the time domain. A minislot may also be called a subslot. A minislot may be composed of fewer symbols than slots. PDSCH (or PUSCH) transmitted in units of time greater than the minislot may be referred to as PDSCH (or PUSCH) mapping type A. PDSCH (or PUSCH) transmitted using the minislot may be referred to as PDSCH (or PUSCH) mapping type B.

Each of the radio frame, subframe, slot, minislot, and symbol represents a time unit for transmitting a signal. Different names may be used for the radio frame, subframe, slot, minislot, and symbol.

For example, one subframe may be referred to as the transmission time interval (TTI), multiple consecutive subframes may be referred to as TTI, and one slot or minislot may be referred to as TTI. That is, at least one of the subframe and the TTI may be a subframe (1 ms) in the existing LTE, a period shorter than 1 ms (For example, 1-13 symbols), or a period longer than 1 ms. Note that, a unit representing TTI may be called a slot, a minislot, or the like instead of a subframe.

Here, TTI refers to the minimum time unit of scheduling in radio communication, for example. Here, TTI refers to the minimum time unit of scheduling in radio communication, for example. For example, in the LTE system, the base station performs scheduling for allocating radio resources (frequency bandwidth, transmission power, etc. that can be used in each user terminal) to each user terminal in units of TTI. The definition of TTI is not limited to this.

The TTI may be a transmission time unit such as a channel-encoded data packet (transport block), a code block, or a code word, or may be a processing unit such as scheduling or link adaptation. When TTI is given, a time interval (for example, the number of symbols) in which a transport block, a code block, a code word, etc. are actually mapped may be shorter than TTI.

When one slot or one minislot is called a TTI, one or more TTIs (That is, one or more slots or one or more minislots) may be the minimum time unit for scheduling. The number of slots constituting the minimum time unit for scheduling (the number of minislots) may be controlled.

TTI having a time length of 1 ms may be referred to as an ordinary TTI (TTI in LTE Rel. 8-12), a normal TTI, a long TTI, a normal subframe, a normal subframe, a long subframe, a slot, and the like. TTIs shorter than the normal TTI may be referred to as shortened TTI, short TTI, partial or fractional TTI, shortened subframe, short subframe, minislot, subslot, slot, etc.

In addition, a long TTI (for example, ordinary TTI, subframe, etc.) may be read as TTI having a time length exceeding 1 ms, and a short TTI (for example, shortened TTI) may be read as TTI having TTI length of less than the TTI length of the long TTI but TTI length of 1 ms or more.

A resource block (RB) is a resource allocation unit in the time and frequency domains and may include one or more consecutive subcarriers in the frequency domain. The number of subcarriers included in RB may be, for example, twelve, and the same regardless of the topology. The number of subcarriers included in the RB may be determined based on the neurology.

The time domain of the RB may also include one or more symbols and may be one slot, one minislot, one subframe, or one TTI in length. The one TTI, one subframe, and the like may each consist of one or more resource blocks.

The one or more RBs may be called physical resource blocks (PRBs), sub-carrier groups (SCGs), resource element groups (REGs), PRB pairs, RB pairs, and the like.

The resource blocks may be composed of one or more resource elements (REs). For example, one RE may be a radio resource area of one subcarrier and one symbol.

A bandwidth part (BWP) (which may be called a partial bandwidth, etc.) may represent a subset of contiguous common resource blocks (RBs) for a certain neurology in a certain carrier. Here, the common RB may be specified by an index of the RB relative to the common reference point of the carrier. PRB may be defined in BWP and numbered within that BWP.

BWP may include UL BWP (UL BWP) and DL BWP (DL BWP). For the UE, one or more BWPs may be set in one carrier.

At least one of the configured BWPs may be active, and the UE may not expect to send and receive certain signals/channels outside the active BWP. Note that "cell," "carrier," and the like in this disclosure may be read as "BWP."

The above-described structures such as a radio frame, subframe, slot, minislot, and symbol are merely examples. For example, the number of subframes included in the radio frame, the number of slots per subframe or radio frame, the number of minislots included in the slot, the number of symbols and RBs included in the slot or minislot, the number of subcarriers included in the RB, and the number of symbols in the TTI, the symbol length, the cyclic prefix (CP) length, and the like can be varied.

The terms "connected" and "coupled," or any variation thereof, mean any direct or indirect connection or coupling between two or more elements and can include the presence of one or more intermediate elements between two elements "connected" or "coupled" to each other. The connection or coupling between elements may be physical, logical, or a combination thereof. For example, "connection" may be read as "access." As used in the present disclosure, two elements may be considered to be "connected" or "coupled" to each other using at least one of one or more wire, cable, and printed electrical connections and, as some non-limiting and non-inclusive examples, electromagnetic energy having wavelengths in the radio frequency, microwave, and optical (both visible and invisible) domains.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on."

The "means" in the configuration of each apparatus may be replaced with "unit," "circuit," "device," and the like.

Any reference to elements using designations such as "first" and "second" as used in this disclosure does not generally limit the quantity or order of those elements. Such designations can be used in the present disclosure as a convenient way to distinguish between two or more elements. Accordingly, references to first and second elements do not mean that only two elements may be employed therein, or that the first element must in any way precede the second element.

In the present disclosure, the used terms "include," "including," and variants thereof are intended to be inclusive in a manner similar to the term "comprising." Furthermore, it is intended that the term "or" as used in the present disclosure is not an exclusive OR.

Throughout this disclosure, for example, during translation, if articles such as a, an, and the in English are added, in this disclosure, these articles shall include plurality of nouns following these articles.

As used in this disclosure, the terms "determining," "judging" and "deciding" may encompass a wide variety of actions. "Judgment" and "decision" includes judging or deciding by, for example, judging, calculating, computing, processing, deriving, investigating, looking up, search, inquiry (e.g., searching in a table, database, or other data structure), ascertaining, and the like. In addition, "judgment" and "decision" can include judging or deciding by receiving (for example, receiving information), transmitting (for example, transmitting information), input (input), output (output), and access (accessing) (e.g., accessing data in a memory). In addition, "judgement" and "decision" can include judging or deciding by resolving, selecting, choosing, establishing, and comparing. That is, "judgment" and "decision" may include deeming any action "judgment" and "decision." Moreover, "judgment (decision)" may be read as "assuming," "expecting," "considering," and the like.

In the present disclosure, the term "A and B are different" may mean "A and B are different from each other." It should be noted that the term may mean "A and B are each different from C." Terms such as "leave," "coupled," or the like may also be interpreted in the same manner as "different."

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### [Explanation of Reference Numerals]

10 Radio communication system
20 NG-RAN
100 gNB
110 Reception unit
120 Transmission unit
130 Control unit
200 UE
210 Radio signal transmission and reception unit
220 Amplifier unit
230 Modulation and demodulation unit
240 Control signal and reference signal processing unit
250 Encoding/decoding unit
260 Data transmission and reception unit
270 Control unit
1001 Processor
1002 Memory
1003 Storage
1004 Communication device
1005 Input device
1006 Output device
1007 Bus

## Claims

1. A terminal comprising:
a control unit that selects, when a first uplink control information on a first dedicated physical uplink control channel having a first priority overlaps in a time domain with a second uplink control information on a second dedicated physical uplink control channel having a second priority and a second uplink control information on a second dedicated physical uplink shared channel having a second priority based on a specific condition, and multiplexes a selected second uplink control information with the first uplink control information.

2. The terminal of claim 1, wherein
the specific condition includes a first condition for preferentially selecting a second uplink control information on the second dedicated physical uplink control channel.

3. The terminal of claim 1 or claim 2, wherein
the specific condition includes a second condition for preferentially selecting a second uplink control information on the second dedicated physical uplink shared channel.

4. A radio communication system comprises:
a terminal; and
a base station; wherein
the terminal comprises a control unit that selects, when a first uplink control information on a first dedicated physical uplink control channel having a first priority overlaps in a time domain with a second uplink control information on a second dedicated physical uplink control channel having a second priority and a second uplink control information on a second dedicated physical uplink shared channel having a second priority based on a specific condition, and multiplexes a selected second uplink control information with the first uplink control information.

5. A radio communication method comprising:
selecting, when a first uplink control information on a first dedicated physical uplink control channel having a first priority overlaps in a time domain with a second uplink control information on a second dedicated physical uplink control channel having a second priority and a second uplink control information on a second dedicated physical uplink shared channel having a second priority based on a specific condition, and
multiplexing a selected second uplink control information with the first uplink control information.
